# DEMANDE DE BREVET EUROPEEN

(11) **EP 2 090 467 A1**
(43) Date de publication de la demande: **19.08.2009**
(21) Numéro de dépôt: 09151455.4
(22) Date de dépôt: 27.01.2009
(51) Int. Cl.: B60R 1/00, B60R 1/08

(54) **Dispositif de retrovision de l'arrière de l'habitacle d'un véhicule automobile, avec au moins une partie de miroir de ce dispositif orientable**

(30) Priorité: 14.02.2008 FR 0850932
(71) Demandeur: PEUGEOT CITROËN AUTOMOBILES S.A., 78140 Vélizy Villacoublay (FR)
(72) Inventeur: Rousseau, Xavier, Francis, Jean-Louis, 91220, Bretigny sur Orge (FR)

(57) **Abrégé**

L'invention concerne un dispositif de rétrovision de l'arrière de l'habitacle d'un véhicule automobile, avec au moins une partie de miroir de ce dispositif orientable.

Ce dispositif est **caractérisé en ce que** ce miroir est en deux parties sensiblement adjacentes, au moins l'une des parties étant orientable indépendamment de l'autre autour d'une articulation.

Application dans le domaine des véhicules automobiles.

## Description

La présente invention concerne, d'une façon générale, un dispositif de rétrovision de l'arrière de l'habitacle d'un véhicule automobile, avec au moins une partie de miroir de ce dispositif orientable.

Plus particulièrement mais non exclusivement, la présente invention concerne un rétroviseur enfant pour un véhicule automobile avec deux parties réglables permettant au conducteur et au passager avant de voir les places arrière du véhicule sur lesquelles peuvent être assis un ou des enfants.

Il est connu, dans un véhicule automobile, d'utiliser un dispositif de rétrovision, dit rétroviseur enfant. Ce rétroviseur peut se fixer sur le pare brise ou sur le tableau de bord par l'intermédiaire d'un pied et permet à une personne assise à l'avant de surveiller la banquette arrière. De préférence, un miroir convexe apporte un angle de vue avantageux pour surveiller ce siège arrière, ceci pouvant être particulièrement approprié pour la surveillance d'un enfant mais aussi d'un objet déposé sur le siège arrière du véhicule. Ce dispositif de rétrovision est généralement installé dans le véhicule à proximité du rétroviseur principal.

Cependant, un tel rétroviseur enfant connu ne permet qu'à une seule personne, soit le conducteur ou soit le passager avant, selon l'orientation du rétroviseur d'accéder à cette vision arrière. Le conducteur ou le passager doit orienter le rétroviseur enfant afin qu'il puisse voir les places arrière ce qui change le réglage de ce rétroviseur. C'est une manipulation pour le conducteur pouvant engendrer une inattention de celui-ci, source d'accident.

Il est connu du document US-A-4 345 819 d'utiliser un rétroviseur central intérieur de véhicule automobile présentant plusieurs miroirs connectés entre eux par des moyens mobiles afin d'être orientés par le conducteur pour lui permettre une vue arrière du côté droit et gauche ainsi qu'une vue arrière centrale de la route, ce qui évite les risques de création d'un angle mort de vision. Ces miroirs peuvent être déplacés latéralement ou être inclinés l'un par rapport à l'autre. Le nombre de miroirs utilisés dans ce document entraîne un dispositif de rétrovision compliqué avec une surcharge non esthétique d'éléments superposés les uns avec les autres. Enfin et surtout, dans ce document, le problème de l'accessibilité à la vision aux sièges arrière par les deux occupants assis à l'avant du véhicule n'est pas évoqué et il n'y a aucun élément divulgué ou suggéré à l'homme de métier pour permettre de garantir une vision arrière à ces occupants sans mettre en oeuvre un réglage compliqué d'un rétroviseur.

La présente invention a pour but de fournir un dispositif de rétrovision de l'habitacle arrière d'un véhicule qui puisse permettre un accès simultané des deux personnes assises à l'avant à une vision de l'habitacle arrière d'une manière simple et indépendante.

A cet effet, l'invention a pour objet un dispositif de rétrovision d'un véhicule automobile comprenant un miroir permettant au conducteur ou au passager avant d'avoir une vue sur l'arrière de l'habitacle du véhicule, caractérisé en ce que ce miroir est en deux parties sensiblement adjacentes, au moins l'une des parties étant orientable indépendamment de l'autre autour d'une articulation.

Selon d'autres caractéristiques du dispositif :
- il comporte au moins un corps de support pour les miroirs,
- les deux parties de miroir sont orientables indépendamment l'une de l'autre,
- les deux parties de miroir présentent une articulation commune,
- les deux parties de miroir sont sensiblement égales et articulées au milieu de celui-ci,
- l'articulation est une charnière s'étendant transversalement au miroir en position non orientée,
- l'articulation ou les articulations sont à rotule,
- quand une seule partie de miroir est orientable, un moyen solidaire fixe du corps du dispositif de rétrovision présente une cavité sphérique dans laquelle est monté réglable par pivotement, par l'intermédiaire d'une rotule, un élément disposé au dos de cette partie de miroir et solidaire de celle-ci, cette partie de miroir étant destinée à un occupant avant du véhicule en étant orientable pour fournir à celui-ci une image d'une partie arrière de l'habitacle du véhicule, la partie de miroir fixe pour l'autre occupant avant ayant été placée dans une position de manière à permettre l'obtention d'une image de la partie arrière de l'habitacle dans cette position fixe,
- l'occupant à partie de miroir mobile est le passager tandis que le conducteur a une partie de miroir fixe,
- quand les deux parties de miroir sont orientables, le corps du dispositif présente un moyen solidaire fixe de ce corps avec une cavité sphérique dans laquelle est monté réglable par pivotement, par l'intermédiaire d'une rotule, un élément disposé au dos de chaque partie de miroir et solidaire de celle-ci, ces parties de miroir étant dédiées respectivement au conducteur ou au passager avant en étant orientables pour fournir à celui-ci une image d'une partie arrière de l'habitacle du véhicule.

L'invention concerne aussi un véhicule automobile, caractérisé en ce qu'il comprend un tel dispositif de rétrovision.

Selon la présente invention, le miroir est divisé en deux parties de manière à permettre au conducteur et au passager avant d'avoir une image de la partie arrière de l'habitacle du véhicule sans avoir à dérégler entièrement l'orientation du dispositif de rétrovision pour l'autre personne assise à l'avant de ce véhicule.

Une articulation, par exemple de type charnière entre les parties de miroir ou de rotule sous au moins une partie de miroir, permet de dissocier les deux parties du miroir en assurant ainsi un réglage pour au moins une partie de miroir indépendamment de l'autre partie.

L'intérêt de la présente invention se situe dans le fait qu'il n'est plus nécessaire de devoir régler le dispositif de rétrovision dans son ensemble lorsque les deux sièges avant du véhicule sont occupés pour l'adapter à une personne spécifique assise à l'avant. Cela permet, lors d'un long trajet, aux deux occupants avant de surveiller les enfants assis à l'arrière du véhicule sans constamment dérégler ce dispositif de rétrovision pour l'autre occupant avant.

L'invention va maintenant être décrite plus en détail mais de façon non limitative en regard des figures annexées, dans lesquelles :
- la figure 1 est une représentation schématique d'un dispositif de rétrovision connu de l'état de la technique,
- la figure 2 est une représentation schématique d'un dispositif de rétrovision conforme à la présente invention.

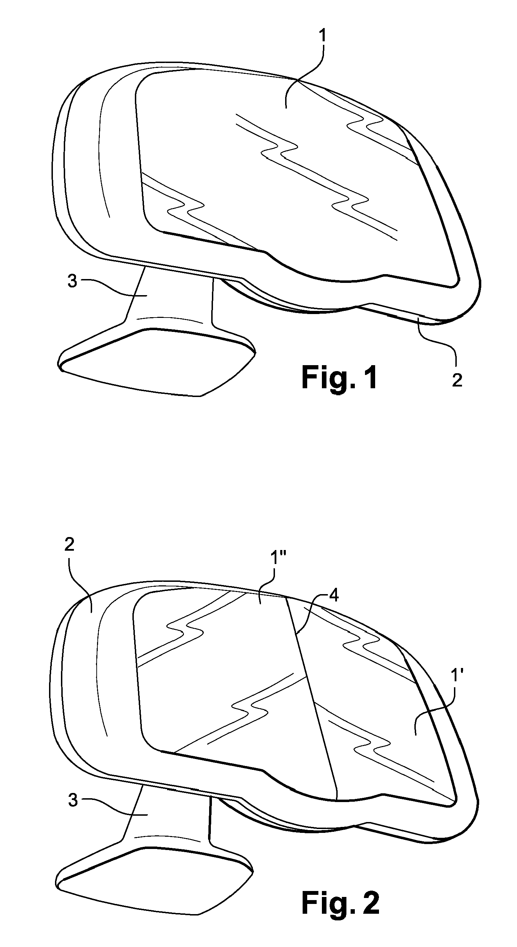

La figure 1 montre un dispositif de rétrovision pouvant servir de rétroviseur enfant, afin par exemple, de surveiller les enfants assis sur le siège arrière. Cette utilisation ne doit pas cependant être considérée comme limitative.

Le dispositif de rétrovision comprend un miroir 1, de préférence bombé, disposé sur un support 2 formant le corps du dispositif. Le dispositif peut être fixé par un pied 3 sur la console avant ou sur la vitre avant.

La figure 2 montre un dispositif de rétrovision selon la présente invention.

Ce dispositif de rétrovision d'un véhicule automobile comprend un miroir permettant au conducteur ou au passager avant d'avoir une vue sur l'arrière de l'habitacle du véhicule, ce miroir étant en deux parties 1' et 1" sensiblement adjacentes, au moins l'une des parties étant orientable indépendamment de l'autre autour d'une articulation 4. Le dispositif de rétrovision peut comprendre un corps 2 entourant les deux parties de miroir 1' et 1''.

A cette figure, les deux parties de miroir 1' et 1" sont orientables indépendamment l'une de l'autre et présentent une articulation commune 4, ces deux parties 1' et 1" étant sensiblement égales et articulées au milieu du miroir.

Toujours à cette figure, sans que cela soit limitatif, l'articulation 4 est une charnière s'étendant transversalement au plan du miroir formé par les deux parties, dans la position où il n'y a pas d'inclinaison des parties de miroir 1' et 1" l'une par rapport à l'autre. Les deux parties 1' et 1" sont donc inclinables autour de cette charnière 4, des moyens de butée pour limiter l'inclinaison de ces parties de miroir 1' et 1" pouvant, en outre, être prévus.

Il est à noter que ce dispositif de rétrovision est indépendant du rétroviseur classique et qu'il n'interfère pas avec celui-ci. Le rétroviseur principal existe et reste en place. C'est le dispositif de rétrovision, appelé fréquemment rétroviseur enfant, déjà existant à ce jour en option sur de nombreux véhicules qui a la particularité d'avoir un miroir coupé en deux dans le même volume, ce qui permet simplement aux deux personnes à l'avant du véhicule de pouvoir observer, entre autres, les enfants qui se trouvent à l'arrière.

Ainsi, dans le volume existant du dispositif de rétrovision, le miroir 1 existant est coupé en deux parties de miroir 1' et 1'', ce qui permet d'avoir deux angles de vision différents.

Selon l'invention, d'autres formes de réalisation sont prévues.

Par exemple, une seule partie de miroir peut être inclinable, l'autre restant fixe car étant déjà en position adéquate pour permettre de réfléchir une image de l'habitacle arrière pour soit le conducteur soit le passager avant. Avantageusement, dans ce cas, c'est la partie du miroir destinée au conducteur qui est fixe et préréglée. En effet, celui-ci n'aura pas à effectuer de manipulations qui peuvent être dangereuses pour la conduite du véhicule automobile.

Dans une autre forme de réalisation de l'invention, l'articulation ou les articulations sont à rotule.

Pour une telle articulation à rotule, dans le cas où une seule partie de miroir est orientable, un moyen solidaire fixe du corps du dispositif de rétrovision présente une cavité sphérique dans laquelle est monté réglable par pivotement, par l'intermédiaire d'une rotule, un élément disposé au dos de cette partie de miroir et solidaire de celle-ci, cette partie de miroir étant destinée au passager avant en étant inclinable pour fournir à celui-ci une image d'une partie arrière de l'habitacle du véhicule, la partie de miroir fixe pour le conducteur ayant été placée dans une position de manière à permettre l'obtention d'une image de la partie arrière de l'habitacle dans cette position fixe.

Pour deux articulations à rotule, quand les deux parties de miroir sont orientables, le corps du dispositif présente un moyen solidaire fixe de ce corps avec une cavité sphérique dans laquelle est monté réglable par pivotement, par l'intermédiaire d'une rotule, un élément disposé au dos de chaque partie de miroir et solidaire de celle-ci, ces parties de miroir étant dédiées respectivement au conducteur ou au passager avant en étant inclinables pour fournir à celui-ci une image d'une partie arrière de l'habitacle du véhicule. Dans un tel cas, les deux parties de miroir n'ont pas de liaison commune et un intervalle réduit peut être aménagé entre elles pour ne pas gêner leur pivotement.

Il convient de noter que les deux parties de miroir peuvent ne pas être similaires et que la partie destinée au passager soit plus grande ou plus petite que celle destinée au conducteur.

De même, l'articulation d'au moins une partie de miroir n'est pas limitée à une articulation à charnière ou à une articulation à rotule.

L'invention concerne aussi un véhicule automobile, **caractérisé en ce qu**'il comprend un tel dispositif de rétrovision.

Le dispositif de rétrovision, appelé rétroviseur enfant, est une option déjà existante sur les véhicules automobiles, et son style propre a été élaboré de façon à lui permettre de s'intégrer dans le style des véhicules actuels. La présente invention permet de ne pas effectuer une surcharge en rajoutant un appendice inesthétique pour remplir cette nouvelle fonction, par exemple au rétroviseur principal. Au contraire, la présente invention peut utiliser le dispositif de rétrovision spécialement conçu pour être bien intégré dans l'environnement du véhicule et l'améliorer en divisant le miroir en deux parties permettant d'avoir deux angles de visions distincts sur le même miroir, sans que ce dispositif de rétrovision ne soit changé d'aspect extérieur ou surchargé par d'autres éléments de rétrovision ajoutés.

L'invention n'est nullement limitée aux modes de réalisation décrits et illustrés qui n'ont été donnés qu'à titre d'exemples.

## Revendications

1. Dispositif de rétrovision d'un véhicule automobile comprenant un miroir (1', 1'') permettant au conducteur ou au passager avant d'avoir une vue sur l'arrière de l'habitacle du véhicule, ce miroir (1', 1") étant en deux parties sensiblement adjacentes, au moins l'une des parties (1' ou 1'') étant orientable indépendamment de l'autre autour d'une articulation **caractérisé en ce que** les deux parties de miroir (1', 1") sont orientables indépendamment l'une de l'autre.

2. Dispositif de rétrovision selon la revendication 1, **caractérisé en ce qu'**il comporte au moins un corps (2) de support pour les miroirs.

3. Dispositif de rétrovision selon l'une quelconque des revendications 1 à 2, **caractérisé en ce que** les deux parties de miroir (1', 1'') présentent une articulation (4) commune.

4. Dispositif de rétrovision selon la revendication 3, **caractérisé en ce que** les deux parties de miroir (1', 1'') sont sensiblement égales et articulées au milieu de celui-ci.

5. Dispositif de rétrovision selon l'une quelconque des revendications 3 ou 4, **caractérisé en ce que** l'articulation est une charnière (4) s'étendant transversalement au miroir (1', 1") en position non orientée.

6. Dispositif de rétrovision selon la revendication 1, **caractérisé en ce que** l'articulation ou les articulations (4) sont à rotule.

7. Dispositif de rétrovision, selon la revendication 6, **caractérisé en ce que,** quand une seule partie de miroir (1' ou 1'') est orientable, un moyen solidaire fixe du corps (2) du dispositif de rétrovision présente une cavité sphérique dans laquelle est monté réglable par pivotement, par l'intermédiaire d'une rotule, un élément disposé au dos de cette partie de miroir (1' ou 1'') et solidaire de celle-ci, cette partie de miroir (1' ou 1'') étant destinée à un occupant avant du véhicule en étant orientable pour fournir à celui-ci une image d'une partie arrière de l'habitacle du véhicule, la partie de miroir fixe (1' ou 1") pour l'autre occupant avant ayant été placée dans une position de manière à permettre l'obtention d'une image de la partie arrière de l'habitacle dans cette position fixe.

8. Dispositif selon la revendication 7, **caractérisé en ce que** l'occupant à partie de miroir mobile (1' ou 1") est le passager tandis que le conducteur a une partie de miroir fixe (1' ou 1'').

9. Dispositif selon la revendication 6, **caractérisé en ce que,** quand les deux parties de miroir (1' ou 1'') sont orientables, le corps (2) du dispositif présente un moyen solidaire fixe de ce corps (2) avec une cavité sphérique dans laquelle est monté réglable par pivotement, par l'intermédiaire d'une rotule, un élément disposé au dos de chaque partie de miroir et solidaire de celle-ci, ces parties de miroir (1' ou 1") étant dédiées respectivement au conducteur ou au passager avant en étant orientables pour fournir à celui-ci une image d'une partie arrière de l'habitacle du véhicule.

10. Véhicule automobile, **caractérisé en ce qu'**il comprend un dispositif de rétrovision selon l'une quelconque des revendications précédentes.
